# EUROPEAN PATENT APPLICATION

(11) **EP 4 576 439 A1**
(43) Date of publication of application: **25.06.2025**
(21) Application number: 23862439.9
(22) Date of filing: 06.09.2023
(51) Int. Cl.: H01R 9/22, H01R 13/56

(54) **SOCKET**

(30) Priority: 06.09.2022 CN 202211095576; 06.09.2022 CN 202222392869 U; 06.09.2022 CN 202222369453 U
(71) Applicant: QINGDAO HAIER REFRIGERATOR CO., LTD., Qingdao, Shandong 266101 (CN); Haier Smart Home Co., Ltd, Qingdao, Shandong 266101 (CN)
(72) Inventor: LI, Kang, Qingdao, Shandong 266101 (CN); LI, Feng, Qingdao, Shandong 266101 (CN); XIA, Enpin, Qingdao, Shandong 266101 (CN); LI, Chunyang, Qingdao, Shandong 266101 (CN)
(74) Representative: Michalski Hüttermann & Partner Patentanwälte mbB
(86) International application number: PCT/CN2023/117278
(87) International publication number: WO 2024/051745

(57) **Abstract**

A socket, comprising: a body (1) and a terminal block (3). A side wall of the body (1) is provided with a wire port (2), so that a wire (37) enters the inner side of the body (1) from the wire port (2); and the terminal block (3) is provided on the inner side of the body (1) and is adapted to be connected to the wire (37). The wire (37) enters the inner side of the socket body (1) from the wire port (2) on the side wall of the body (1), and is connected to a wire inside a wall body by means of connecting terminals (15) on the inner side of the body (1), so that the socket may be embedded in the wall body and only expose the edge, and the socket can be connected to an electrical appliance only by externally connecting to a power strip. In this way, when an electrical appliance is placed in front of a socket, the electrical appliance can be pushed to a position close to a wall body, thereby saving the occupied space.

## Description

This application claims priority to Chinese Patent Application No. CN202211095576.1, filed on September 6, 2022, Chinese Patent Application No. CN202222392869.8, filed on September 6, 2022, and Chinese Patent Application No. CN202222369453.4, filed on September 6, 2022, the contents of which are incorporated herein by reference in their entirety.

### TECHNICAL FIELD

The present disclosure relates to the technical field of sockets, and more particularly to a socket.

### BACKGROUND

At present, the installation and connection of electrical appliances are inseparable from sockets.

In order to cooperate with the electrical connection circuit, the related art discloses a multifunctional socket, which comprises a socket main body, a housing, a base holder, and a base. The socket main body is provided with a general plug-in three-hole, a concave groove provided on the lower side of the general plug-in three-hole, and a USB plug-in hole provided in the concave groove. The socket main body is provided with a first clamping portion clamped with the inner side of the base holder, and the base is provided with a second clamping portion clamped with the inner side of the base. The base holder is provided with a third clamping portion clamped with the housing. The base has a cavity, the cavity is provided with a circuit board and a copper connection terminal electrically connected to the circuit board, and the circuit board is provided with a USB female seat.

In the process of implementing the embodiments of the present disclosure, it is found that at least the following problems in the related art:
The socket is provided with a plug-in hole. After the power plug of the electrical appliance is inserted into the plug-in hole of the socket, the power plug and the socket will protrude from the wall. When the electrical appliance is placed directly in front of the socket, the electrical appliance is far away from the wall due to the protruding of the power plug and the socket, and the space between the electrical appliance and the wall will be wasted.

### SUMMARY

A brief summary is given below to give a basic understanding of some aspects of the disclosed embodiments. The summary is not intended to be a general comment, nor is it intended to identify key/important constituent elements or to delineate the scope of protection of these embodiments, but rather serves as a preface to the detailed description that follows.

The embodiment of the present disclosure provides a socket, so as to solve the problem that the electrical appliance is far away from the wall surface due to the protruding of the power plug and the socket, and the space is wasted.

In some embodiments, the socket comprises a main body and a terminal block. A side wall of the main body is provided with a wire port, allowing a wire enters an inner side of the main body from the wire port. The terminal block is disposed in the inner side of the main body and is adapted to be connected to the wire.

In some embodiments, the inner side of the main body is provided with a first reinforcing rib, the first reinforcing rib is provided with an avoidance port, the avoidance port is communicated with the wire port, an inner side wall of the first reinforcing rib is provided with an arched protrusion, and in a case where the wire enters the inner side of the main body, the wire abuts against the arched protrusion.

In some embodiments, the inner side of the main body is further provided with a second reinforcing rib and a third reinforcing rib, the second reinforcing rib is disposed opposite to the first reinforcing rib, the third reinforcing rib is connected between the first reinforcing rib and the second reinforcing rib, the first reinforcing rib, the second reinforcing rib, and the third reinforcing rib enclose a accommodating space, and the terminal block is located in the accommodating space. The terminal block is provided with a first screw hole to connect to the wire, and a height of the second reinforcing rib is lower than a height of the first screw hole.

In some embodiments, the terminal block comprises connection terminals comprising a first terminal and a second terminal, one of the first terminal and the second terminal for an incoming wire and the other for an outgoing wire, the first terminal being disposed perpendicularly to the second terminal.

In some embodiments, the connection terminals are provided multiple, the terminal block further comprises a housing sleeved outside the multiple connection terminals, the housing is provided with a connection portion to connect the multiple connection terminals, a height of the connection portion is lower than a height of the connection portions, the connection portion is provided with a through hole, and a first fastener passes through the through hole and the main body to connect the terminal block and the main body.

In some embodiments, the housing is provided with a protrusion, and a length of the protrusion is a stripping length of the wire.

In some embodiments, the socket further comprises a wire clip disposed in the inner side of the main body and connected to the main body to fix the wire, the wire clip is provided with a convex circular structure, the main body is provided with a concave circular structure, the convex circular structure is opposite to the concave circular structure, and the wire passes between the convex circular structure and the concave circular structure.

In some embodiments, the wire clip is provided with a second screw hole, a second fastener passes through the second screw hole and the main body to fix the wire, and the second screw hole is a counterbore.

In some embodiments, the socket further comprises a panel covered on an outer side of the main body, a side wall of the panel is provided with a wire outlet, the wire outlet is communicated with the wire port, and the side wall of the panel is provided with an mounting port to disassemble the panel.

In some embodiments, the socket further comprises a wire-protected clip, the wire-protected clip comprises a wire mounting portion and a fixing portion, the wire mounting portion is provided with a wire slot to mount the wire, the fixing portion is located on one side of an axis of the wire mounting portion, and the wire mounting portion is provided with a convex rib.

The socket provided by the embodiment of the present disclosure can realize the following technical effects:
The wire enters into the inner side of the main body from the wire port on the side wall of the socket main body and is connected to the wire inside a wall body through the connection terminal on the inner side of the socket main body, so that the socket can be embedded in the wall body, only the edge is exposed, and the socket can be connected to electrical appliances only by externally connecting a power strip. In this way, when the electrical appliance is placed directly in front of the socket, the electrical appliance can be pushed close to the wall body, thus saving the floor space.

The above general description and the following description are merely exemplary and explanatory, and are not intended to limit the present disclosure.

### BRIEF DESCRIPTION OF THE DRAWINGS

One or more embodiments are illustrated by the accompanying drawings corresponding thereto, these illustrative descriptions and drawings do not constitute a limitation of the embodiments, elements having the same reference numerals in the drawings are shown as similar elements, the drawings do not constitute a limitation of scale, and where:
Fig. 1 is a schematic structural diagram of a socket provided by an embodiment of the present disclosure.
Fig. 2 is an exploded view of the socket provided by the embodiment of the present disclosure.
Fig. 3 is a schematic structural diagram of the main body provided by the embodiment of the present disclosure.
Fig. 4 is a partial structural schematic diagram of the socket provided by the embodiment of the present disclosure.
Fig. 5 is a partial structural schematic diagram of the socket provided by the embodiment of the present disclosure.
Fig. 6 is a cross-sectional schematic structural diagram of the main body provided by the embodiment of the present disclosure.
Fig. 7 is a schematic structural diagram at a first viewing angle of the terminal block provided by the embodiment of the present disclosure.
Fig. 8 is a schematic structural diagram at a second viewing angle of a terminal block provided by the embodiment of the present disclosure.
Fig. 9 is a schematic structural diagram at the first viewing angle of the wire clip provided by the embodiment of the present disclosure.
Fig. 10 is a schematic structural view at the second viewing angle of the wire clip provided by the embodiment of the present disclosure.
Fig. 11 is a partial schematic structural diagram of the socket provided by the embodiment of the present disclosure.
Fig. 12 is a schematic structural diagram at the first viewing angle of the panel according to the embodiment of the present disclosure.
Fig. 13 is a schematic structural diagram at the second viewing angle of the panel provided by the embodiment of the present disclosure.
Fig. 14 is a schematic structural diagram of the wire-protected clip according to the embodiment of the present disclosure.

### REFERENCES IN THE DRAWINGS:

1: body; 2: wire port; 3: terminal block; 4: claw; 5: positioning post; 6: positioning groove; 7: first reinforcing rib; 71: avoidance port; 8: arched protrusion; 9: second reinforcing rib; 10: third reinforcing rib; 11: fourth reinforcing rib; 12: fifth reinforcing rib; 13: accommodating space; 14: first screw hole; 15 connection terminal; 151: first terminal; 152: second terminal; 16: housing; 17: connection portion; 1701: through hole; 18: first fastener; 19: protrusion; 20: wiring mark; 21: crimping screw; 22: gasket; 23: trunking box; 24: wire clip; 25: convex circular structure; 26: concave circular structure; 27: second screw hole; 28: second fastener; 29: panel; 30: wire outlet; 31: mounting port; 32: limiting rib; 33: buckle; 34: slot; 35: rubber ring; 36 wire-protected clip; 361: wire mounting portion; 362: fixing portion; 3611: wire slot; 3612: rib; 37: wire.

### DETAILED DESCRIPTION OF THE EMBODIMENTS

In order to understand the features and technical contents of the embodiments of the present disclosure in more detail, the implementation of the embodiments of the present disclosure will be described in detail below with reference to the accompanying drawings, which are for reference and illustration only, and are not intended to limit the embodiments of the present disclosure.

In the following technical description, for convenience of explanation, a number of details are passed through to provide a full understanding of the disclosed embodiments. However, one or more embodiments may still be implemented without these details. In other cases, well-known structures and devices can be simplified in illustration to simplify the drawings.

The terms "first", "second", and the like in the specification and claims of the embodiments of the present disclosure, and the above-described drawings are used to distinguish similar objects, and are not necessarily used to describe a specific order or sequence. It should be understood that the data so used can be interchangeable where appropriate so that the embodiments of the embodiments of the present disclosure described herein are examples. Furthermore, the terms "comprise" and "has" and any variations thereof are intended to cover non-exclusive inclusions.

In an embodiment of the present disclosure, the orientation or positional relationship indicated by the terms "upper", "lower", "inner", "middle", "outer", "front", "rear", and the like is based on the orientation or positional relationship shown in the drawings. These terms are primarily intended to better describe embodiments of the present disclosure and embodiments thereof, and are not intended to limit that an indicated device, element, or component must have a particular orientation, or be constructed and operated in a particular orientation. Moreover, some of the above terms can be used to mean other meanings in addition to orientation or positional relationships, for example, the term "on" may also be used to mean some kind of attachment or connection relationship in some cases. Those of ordinary skill in the art can understand the specific meanings of these terms in the embodiments of the present disclosure according to the specific circumstances.

In addition, the terms "provide", "connect", and "fix" are to be understood broadly. For example, a "connect" can be a fixed connection, a detachable connection, or a monolithic construction; can be a mechanical connection, or an electrical connection. It can be directly connected, indirectly connected through an intermediate medium, or internal communication between two devices, elements or components. For those skilled in the art, the specific meanings of the above terms in the embodiments of the present disclosure can be understood according to specific circumstances.

Unless otherwise specified, the term "a plurality of / multiple" means two or more.

In the embodiment of the present disclosure, the character "/" indicates that the object before and after is in an "or" relationship. For example, A/B means: A or B.

The term "and/or" is an associative relationship describing objects, indicating that there can be three relationships. For example, A and/or B represent three relationships: A or B, or A and B.

In the case where there is no conflict, the embodiments of the present disclosure and the elements of the embodiments can be combined with each other.

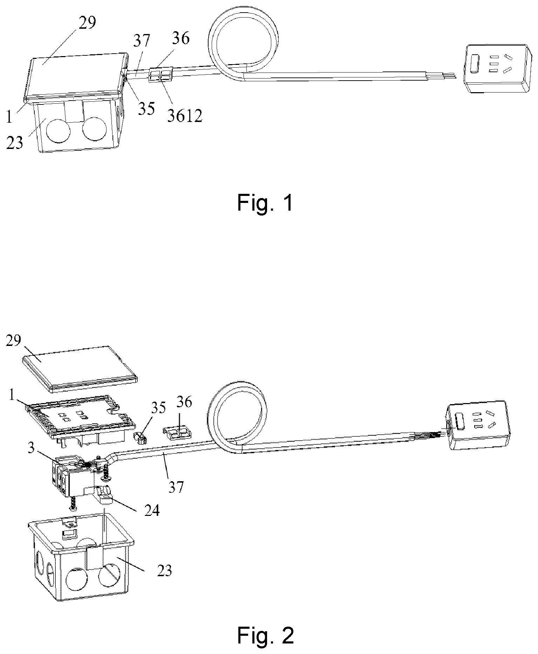

As shown in Figs. 1 to 5, an embodiment of the present disclosure provides a socket comprising a main body 1 and a terminal block 3. The side wall of the main body 1 is provided with a wire port 2, allowing a wire 37 enters the inner side of the main body 1 from the wire port 2. The terminal block 3 is disposed on the inner side of the main body 1 and is adapted to be connected to the wire 37.

With the socket provided by the embodiment of the present disclosure, the wire 37 enters the inner side of the main body 1 from the wire port 2 on the side wall of the socket main body 1, and the wire 37 inside the wall body is connected to the connection terminal 15 on the inner side of the main body 1, which enables the socket to be embedded in the wall body, only the edge is exposed, and the socket only needs to be externally connected to a power strip to connect electrical appliances. In this way, when the electrical appliance is placed directly in front of the socket, the electrical appliance can be pushed close to the wall body, thus saving the floor space.

The main body 1 comprises a front plate and a side wall disposed on the side of the front plate, there is a folded angle between the front plate and the side wall, for example, an angle of 90 °, and the side wall is provided with the wire port 2, allowing the wire 37 enters the inner side of the main body 1 from the wire port 2.

The terminal block 3 is provided on the inner side of the main body 1, and a claw 4 can be provided on the inner side of the main body 1 to be engaged with the terminal block 3.

The bottom of the terminal block 3 can be provided with one of a positioning post 5 or a positioning groove 6, the main body 1 is provided with the other of the positioning post 5 or the positioning groove 6, and the positioning post 5 is matched with the positioning groove 6, so that the terminal block 3 is fixed on the inner side of the main body 1, and the positioning post 5 plays the role of guiding and pre-fixing.

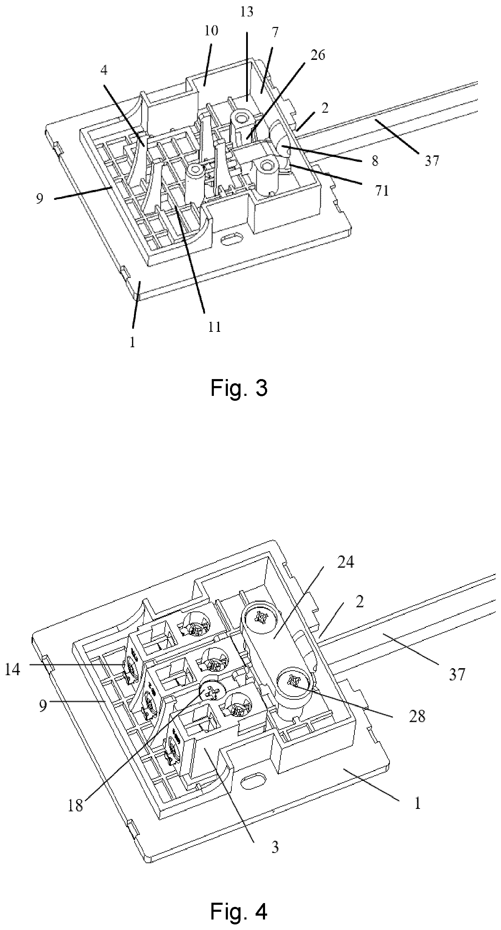

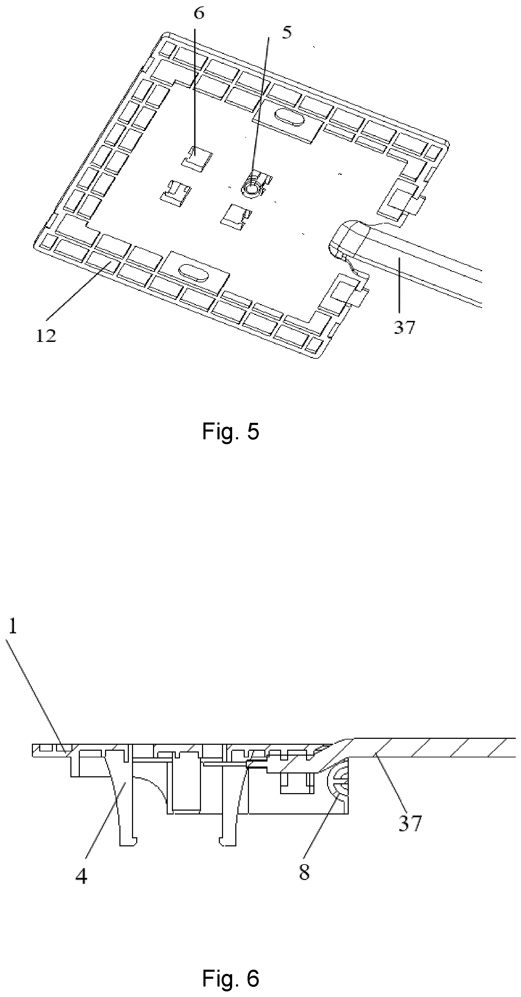

Optionally, as shown in Figs. 3 and 6, the inner side of the main body 1 is provided with a first reinforcing rib 7, the first reinforcing rib 7 is provided with an avoidance port 71, the avoidance port 71 is communicated with the wire port 2, an inner side wall of the first reinforcing rib 7 is provided with an arched protrusion 8, and when the wire 37 enters the inner side of the main body 1, the wire 37 abuts against the arched protrusion 8.

The first reinforcing rib 7 is provided with the avoidance port 71, and the avoidance port 71 communicates with the wire port 2, so that the wire 37 passes through the wire port 2 and the avoidance port 71 and enters the socket main body 1.

The provision of the first reinforcing rib 7 enhances the rigidity of the socket.

In a case where the wire 37 enters the wire port 2, the wire port 2 is less likely to scratch the wire and functions as a guide for the incoming wire, making the incoming wire easier.

Optionally, as shown in Figs. 3 and 4, the inner side of the main body 1 is also provided with a second reinforcing rib 9 and a third reinforcing rib 10, the second reinforcing rib 9 and the first reinforcing rib 7 are opposite to each other, the third reinforcing rib 10 is connected between the first reinforcing rib 7 and the second reinforcing rib 9, the first reinforcing rib 7, the second reinforcing rib 9 and the third reinforcing rib 10 enclose a accommodating space 13, and the terminal block 3 is located in the accommodating space 13. The terminal block 3 is provided with a first screw hole 14 to connect to the wire 37, and the height of the second reinforcing rib 9 is lower than the height of the first screw hole 14.

In this way, the first reinforcing rib 7, the second reinforcing rib 9, and the third reinforcing rib 10 together increase the rigidity of the socket main body 1.

The height of the second reinforcing rib 9 is lower than the height of the screw hole, so that the screw subsequently mounted on the terminal block 3 is not blocked by the second reinforcing rib 9.

Optionally, as shown in Fig. 3, a fourth reinforcing rib 11 is provided in the accommodating space 13.

In this way, the cost is reduced while increasing the strength of the socket, and the structural space of the socket is increased. The fourth reinforcing rib 11 at the position where the terminal block 3 comes into contact with the main body 1 is provided higher and the strength is stronger.

Optionally, as shown in Figs. 1 and 2, the socket further comprises a trunking 3611 box 23, and the trunking 3611 box 23 is connected to the main body 1.

The trunking 3611 box 23 is used to receive various wires 37 for connection, and the trunking 3611 box 23 is embedded inside the wall body.

The trunking 3611 box 23 and the main body 1 can be engaged, interference fitted, or can be connected by screws.

Optionally, as shown in Fig. 5, the outer edge of the main body 1 is provided with a fifth reinforcing rib 12.

Since the inner outer edge of the main body 1 needs to be connected to the trunking 3611 box 23, the fifth reinforcing rib 12 is provided at the outer edge of the main body 1 to increase rigidity.

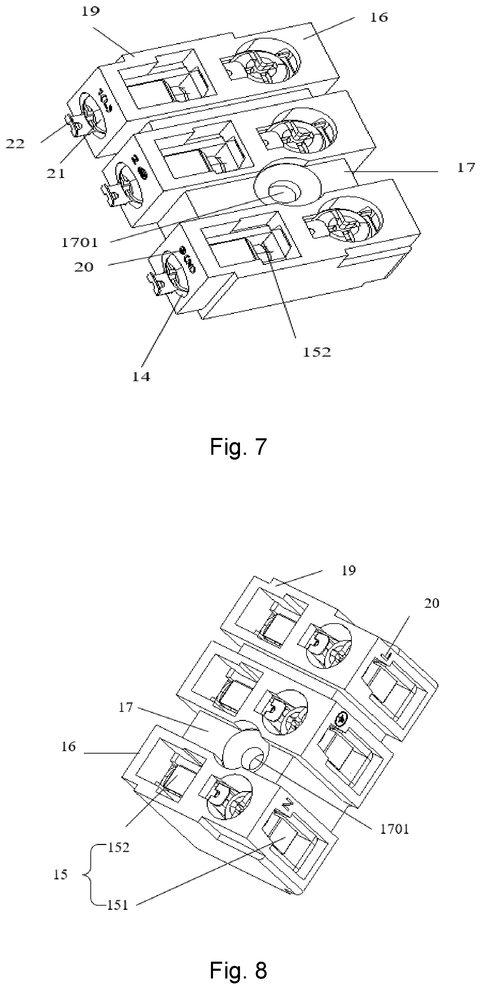

Optionally, as shown in Fig. 7, the terminal block 3 comprises a connection terminal 15, the connection terminal 15 comprises a first terminal 151 and a second terminal 152, one of the first terminal 151 and the second terminal 152 is used for incoming the wire 37 and the other is used for outgoing the wire 37. For example, the first terminal 151 is used for incoming the wire 37, the first terminal 151 is provided with an incoming wire terminal connected to the wire 37, the second terminal 152 is used for outgoing the wire 37, and the second terminal 152 is provided with an outgoing wire terminal connected to the wire 37. The first terminal 151 and the second terminal 152 are disposed perpendicularly so that the incoming terminal and the outgoing terminal are staggered.

In this way, the terminal direction of the terminal block 3 is perpendicular to the incoming wire and the outgoing wire, and the wiring space inside the terminal block 3 can be fully utilized.

Optionally, as shown in Figs. 4 and 7, the terminal blocks 15 are provided multiple, the terminal block 3 further comprises a housing 16 sleeved outside the multiple connection terminals 15, the housing 16 is provided with a connection portion 17 to connect the multiple connection terminals 15, the height of the connecting portion 17 is lower than the height of the connection terminal 15, the connection portion 17 is provided with a through hole 1701, and a first fastener 18 passes through the through hole 1701 and the main body 1 to connect the terminal block 3 and the main body 1.

The height of the connecting portion 17 is lower than the height of the connection terminal 15, the connecting portion 17 is provided with a through hole 1701, and the first fastener 18 passes through the through hole 1701 and the main body 1 to connect the terminal block 3 and the main body 1, so that the installation position of the terminal can be lowered as much as possible, and sufficient space can be reserved for the wire 37 in the trunking 3611 box 23.

The first fastener 18 can be a screw, and the through hole 1701 of the connecting portion 17 can be a counterbore structure, so that the screw reduces the influence of the screw on the wire 37 in the trunking 3611 box 23.

The fourth reinforcing rib 11 on the main body 1 at the position of the terminal block 3 in mating contact with the main body 1 is designed to be higher, so that the local rigidity can be increased.

Optionally, as shown in Fig. 7, the housing 16 is provided with a protrusion 19, and the length of the protrusion 19 is the stripping length of the wire 37.

The protrusion 19 can be provided at any position of the housing 16, for example, on a side wall of the housing 16. In this way, the stripping length of the wire 37 can be directly measured on the terminal block 3, and the wire 37 can be mounted easily.

Optionally, the incoming depth of the first terminal 151 and the second terminal 152 is larger than the stripping length of the wire 37.

In this way, the wire 37 can be prevented from being exposed to the outside of the terminal, the risk of electric shock can be avoided, and safety can be enhanced.

Optionally, as shown in Fig. 8, the housing 16 is provided with a wiring mark 20, corresponding to the first terminal 151 and the second terminal 152.

The marks indicating a live wire, a ground wire, and a neutral wire are provided at a wiring port position of the housing 16 corresponding to the first terminal 151 and the second terminal 152.

In this way, the convenience of connection can be increased when wiring.

Optionally, the housing 16 is made of an insulating material that can withstand the current flow.

Optionally, the widths of the first terminal 151 and the second terminal 152 are larger than or equal to 8.5 mm.

The wiring port of the first terminal 151 and the second terminal 152 is larger than or equal to 8.5 mm, so that the first terminal 151 and the second terminal 152 can meet the wiring requirements of the two wires.

Optionally, as shown in Fig. 7, the terminal block 3 further comprises a crimping screw 21 and a gasket 22. The crimping screw 21 is provided on the side of the first terminal 151 and the second terminal 152, to crimp the wire 37. The gasket 22 is provided on the side of the crimping screw 21, to crimp the wire 37 with the crimping screw 21.

The crimping screw 21 is provided on the side of the first terminal 151 and the second terminal 152, for crimping the wire 37 entering the first terminal 151 and the second terminal 152. The gasket 22 is on the side of the crimping screw 21, and the crimping screw 21 and the gasket 22 cooperate to crimp the wire 37, so as to facilitate installation of the wire 37.

Optionally, as shown in Figs. 3, 4, 9, and 10, the socket further comprises a wire clip 24 disposed on the inner side of the main body 1 and connected to the main body 1 to fix the wire 37. The wire clip 24 is provided with a convex circular structure 25, the main body 1 is provided with a concave circular structure 26, the convex circular structure 25 is opposite to the concave circular structure 26, and the wire 37 passes between the convex circular structure 25 and the concave circular structure 26.

The wire clip 24 is designed in a convex circular structure 25, and the socket main body 1 is provided in a concave circular structure 26 correspondingly, so that the wire 37 can adhere to the socket main body 1 as much as possible and the bending distance can be reduced.

The wire clip 24 is attached as close as possible to the wire port 2, so that maximum space can be allowed to mount the terminal block 3 on the inner side of the main body 1.

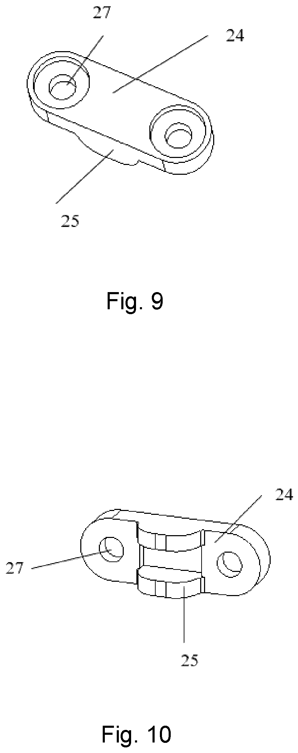

Optionally, as shown in Figs. 4 and 9, the wire clip 24 is provided with a second screw hole 27, a second fastener 28 passes through the second screw hole 27 and the main body 1 to fix the wire 37, and the second screw hole 27 is a counterbore.

The second fastener 28 can be a screw, which passes through the second screw hole 27 and the main body 1 to secure the wire 37.

The second screw hole 27 is designed as a counterbore structure, which can reduce the interference of the screw to the wire harness and increase safety.

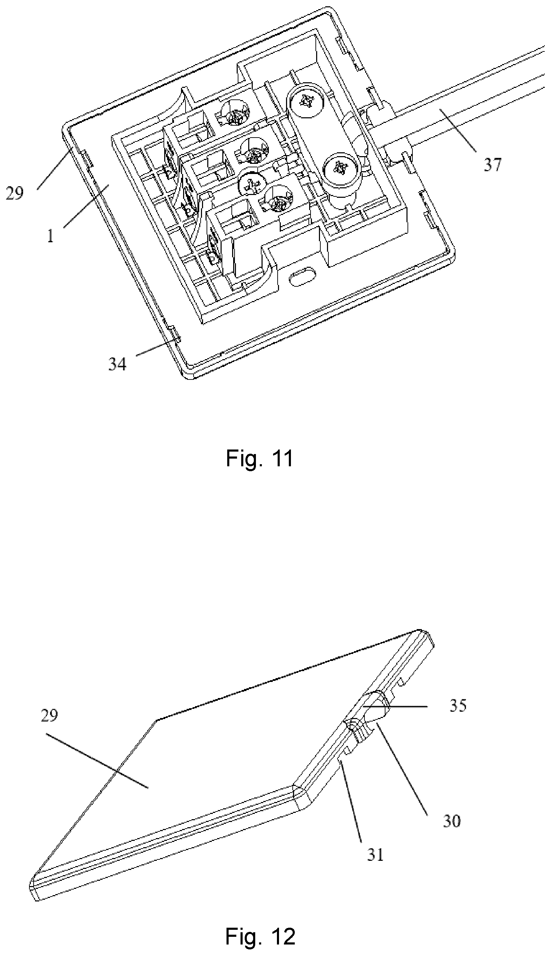

Optionally, as shown in Figs. 11 to 13, the socket further comprises a panel 29 covered on the outside of the main body 1, the side wall of the panel 29 is provided with a wire outlet 30, the wire outlet 30 is communicated with the wire port 2, and the side wall of the panel 29 is provided with a mounting port 31 to disassemble the panel 29.

The panel 29 is covered outside the main body 1, and in a case where the socket is embedded inside the wall body, the panel 29 is exposed outside the wall body, which is visually aesthetic.

A mounting port 31 is provided on the side wall of the panel 29, and during installation and disassembly, a flat-nose plier is conveniently inserted through the mounting port 31 to pry open the panel 29.

A plurality of limiting ribs 32 can be provided on the peripheral side walls of the panel 29 to achieve a stable fit with the socket main body 1.

A plurality of protruding buckles 33 can be provided on the peripheral side walls of the panel 29, and a plurality of recessed slots 34 can be provided at the corresponding position of the socket main body 1, and the buckles 33 and the slots 34 are matched to make the panel 29 and the socket main body 1 more stably connected.

Optionally, as shown in Figs. 11 to 13, the socket further comprises a rubber ring 35 located at the position of the wire outlet 30 and connected to the panel 29.

The rubber ring 35 can be interference fit connected to the panel 29.

The soft texture of the rubber ring 35 can reduce the degree of wear of the wire 37 inserted into the socket and prevent foreign objects from entering the socket.

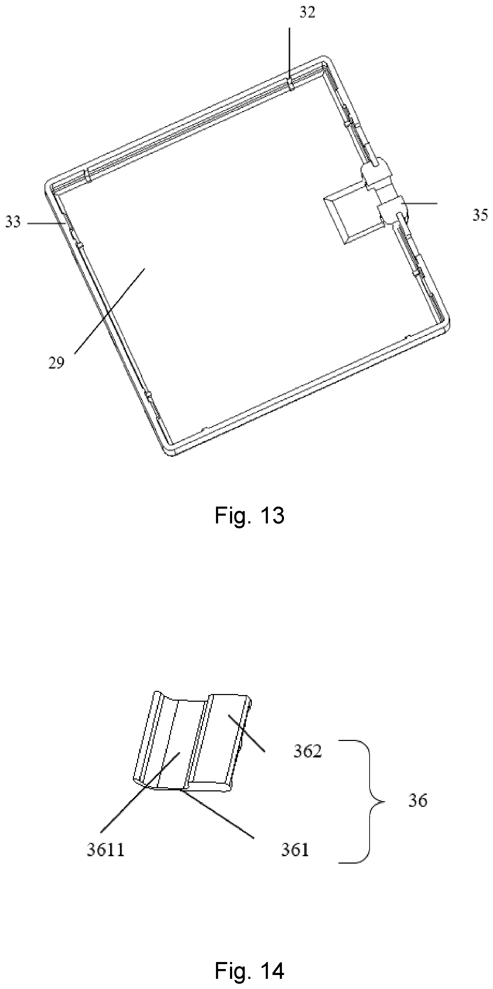

Optionally, as shown in Figs. 1 and 14, the socket further comprises a wire-protected clip 36, the wire-protected clip 36 comprises a wire mounting portion 361 and a fixing portion 362, the wire mounting portion 361 is provided with a wire slot 3611 to mount the wire 37, the fixing portion 362 is located on one side of the axis of the wire mounting portion 361, and the wire mounting portion 361 provided with a convex rib 3612.

The fixing portion 362 of the wire-protected clip 36 can be attached with double-sided adhesive tape so that the wire-protected clip 36 can be fixed to the wall.

The wire mounting portion 361 is provided with the convex rib 3612 to enhance the strength of the wire-protected clip 36.

While installation, the plurality of wire-protected clips 36 can be provided as desired.

The above description and accompanying drawings sufficiently illustrate embodiments of the present disclosure to enable those skilled in the art to practice them. Other embodiments may comprise structural, logical, electrical, process, and other changes.

The examples represent only possible variations. Unless expressly required, individual components and functions are optional, and the order of operations may vary.

The components and features of some embodiments can be comprised in or replaced with components and features of other embodiments. Furthermore, the words used in the disclosure are for the purpose of describing embodiments only and are not intended to limit the claims. As used in the description of the embodiments and claims, the singular forms "a", "an", and "the" are intended to equally comprise the plural forms unless the context clearly indicates otherwise. Similarly, the term "and/or" as used herein refers to any and all possible combinations comprising one or more associated lists.

Additionally, the terms "comprise" and variations thereof "comprises" and/or "comprising", as used in the present disclosure, refer to the presence of stated features, integers, steps, operations, elements, and/or components, but do not preclude the presence or addition of one or more other features, integers, steps, operations, elements, components, and/or groupings thereof. Without further limitation, an element defined by the statement "comprise a" does not preclude the presence of additional identical elements in a process, method, or apparatus comprising the element.

Herein, each embodiment can be focused on differences from other embodiments, and the same and similar parts between the embodiments can be referred to each other. For the method, product, etc. disclosed in the embodiment, if it corresponds to the method portion disclosed in the embodiment, the description of the method portion can be referred to for relevant points.

Embodiments of the present disclosure are not limited to the structures described above and illustrated in the accompanying drawings, and various modifications and changes can be made without departing from the scope thereof. The scope of the present disclosure is limited only by the appended claims.

## Claims

1. A socket, **characterized in that**, comprising:
a main body (1), a side wall of the main body (1) provided with a wire port (2), allowing a wire (37) enters an inner side of the main body (1) from the wire port (2), wherein the inner side of the main body (1) is provided with a first reinforcing rib (7), the first reinforcing rib (7) is provided with an avoidance port (71), and the avoidance port (71) is communicated with the wire port (2); and
a terminal block (3) disposed on the inner side of the main body (1) and adapted to be connected to the wire (37).

2. The socket according to claim 1, wherein
an inner side wall of the first reinforcing rib (7) is provided with an arched protrusion (8), and when the wire (37) enters the inner side of the main body (1), the wire (37) abuts against the arched protrusion (8).

3. The socket according to claim 2, wherein
the inner side of the main body (1) is further provided with a second reinforcing rib (9) and a third reinforcing rib (10), the second reinforcing rib (9) is disposed opposite to the first reinforcing rib (7), the third reinforcing rib (10) is connected between the first reinforcing rib (7) and the second reinforcing rib (9), the first reinforcing rib (7), the second reinforcing rib (9) and the third reinforcing rib (10) enclose a accommodating space (13), and the terminal block (3) is located in the accommodating space (13); and
the terminal block (3) is provided with a first screw hole (14) to connect to the wire (37), and a height of the second reinforcing rib (9) is lower than a height of the first screw hole (14).

4. The socket according to any one of claims 1 to 3, wherein the terminal block (3) comprises:
a connection terminal (15) comprising a first terminal (151) and a second terminal (152), one of the first terminal (151) and the second terminal (152) for incoming the wire (37) and the other for outgoing the wire (37), wherein the first terminal (151) is disposed perpendicularly to the second terminal (152).

5. The socket according to claim 4, wherein the connection terminals (15) are provided multiple and the terminal block (3) further comprises:
a housing (16) sleeved outside the multiple connection terminals (15), wherein the housing (16) is provided with a connection portion (17) to connect the multiple connection terminals (15), a height of the connection portion (17) is lower than heights of the connection terminals (15), the connection portion (17) is provided with a through hole (1701), and the first fastener (18) passes through the through hole (1701) and the main body (1), so as to connect the terminal block (3) and the main body (1).

6. The socket according to claim 5, wherein the housing (16) is provided with a protrusion (19) and a length of the protrusion (19) is a stripping length of the wire (37).

7. The socket according to any one of claims 1 to 6, further comprising:
a wire clip (24) disposed in the inner side of the main body (1) and connected to the main body (1) to fix the wire (37), wherein the wire clip (24) is provided with a convex circular structure (25), the main body (1) is provided with a concave circular structure (26), the convex circular structure (25) is opposite to the concave circular structure (26), and the wire (37) passes between the convex circular structure (25) and the concave circular structure (26).

8. The socket according to claim 7, wherein
the wire clip (24) is provided with a second screw hole (27), a second fastener (28) passes through the second screw hole (27) and the main body (1) to fix the wire (37), and the second screw hole (27) is a counterbore.

9. The socket according to any one of claims 1 to 6, further comprising:
a panel (29) covered on an outer side of the main body (1), wherein a wire outlet (30) is provided on a side wall of the panel (29), the wire outlet (30) is communicated with the wire port (2), and a mounting port (31) is provided on the side wall of the panel (29) for disassembling the panel.

10. The socket according to any one of claims 1 to 6, further comprising:
a wire-protected clip (36) comprising a wire mounting portion (361) and a fixing portion (362), wherein the wire mounting portion (361) is provided with a wire slot (3611) to mount the wire (37), the fixing portion (362) is located on one side of an axis of the wire mounting portion (361), and the wire mounting portion (361) provided with a convex rib (3612).
